Europäisches Patentamt

**European Patent Office**

**Office européen des brevets**

(19)

(11) Numéro de publication: **0 112 763**
**A1**

## DEMANDE DE BREVET EUROPEEN

(12)

(21) Numéro de dépôt: **83402407.7**

(22) Date de dépôt: **13.12.83**

(51) Int. Cl.³: **H 02 M 3/315,** H 02 M 7/515

(30) Priorité: **21.12.82 FR 8221398**

(43) Date de publication de la demande: **04.07.84**
**Bulletin 84/27**

(84) Etats contractants désignés: **DE GB NL SE**

(71) Demandeur: **THOMSON-CGR, 13, square Max-Hymans,
F-75015 Paris (FR)**

(72) Inventeur: **Bouglé, Jean, THOMSON-CSF SCPI 173, bld
Haussmann, F-75379 Paris Cedex 08 (FR)**

(74) Mandataire: **Barbin le Bourhis, Joël et al,
THOMSON-CSF SCPI 173, boulevard Haussmann,
F-75379 Paris Cedex 08 (FR)**

(54) **Système d'alimentation haute tension d'une charge telle que par exemple un générateur de rayons X.**

(57) Selon l'invention, le système comporte un onduleur (12) du type à résonance, un pont redresseur (11) à diodes et une unique boucle de régulation (20, 21, 22, 24) commandant des moyens de commutation commandés (14), formant hacheur, interconnectés entre le pont redresseur et l'onduleur.

Application à la radiologie.

EP 0 112 763 A1

1

# SYSTEME D'ALIMENTATION HAUTE TENSION D'UNE CHARGE
# TELLE QUE PAR EXEMPLE UN GENERATEUR DE RAYONS X

L'invention concerne un système d'alimentation haute tension d'une charge, cette charge pouvant être plus particulièrement un générateur de rayons X pour des applications médicales ou industrielles. L'invention vise plus particulièrement une simplification des moyens de réglage et de régulation de la tension appliquée à la charge ainsi qu'une réduction du taux d'ondulation résiduelle de cette tension.

On connaît un système d'alimentation haute tension d'un générateur de rayons X essentiellement constitué par un pont redresseur, un onduleur du type à résonance alimenté par le pont redresseur et par des moyens de régulation et de réglage admettant comme tension d'erreur un signal représentatif de la tension appliquée aux bornes de la charge. Dans ce type de système, il est difficile de faire varier la tension délivrée à la charge sur toute la plage de variations requises. A titre d'exemple, on a proposé un système comportant deux boucles de régulation et de réglage, l'une agissant sur le pont redresseur pour faire varier la valeur de la tension continue appliquée à l'onduleur et l'autre agissant sur la fréquence de fonctionnement de l'onduleur même. La première boucle de régulation et de réglage permet donc un réglage grossier de tension tandis que la seconde permet un réglage fin. Un tel système est décrit en détail dans le brevet français n°2.451.149.

Ce système est compliqué parce qu'il nécessite deux boucles de régulation et de réglage. En outre, le pont redresseur doit être équipé de thyristors, ou de composants de commutation analogues, qui sont des dispositifs coûteux. Enfin et surtout, il y a un réel inconvénient à faire varier la fréquence de l'onduleur. En effet, le fonctionnement de celui-ci est optimal lorsque la fréquence d'oscillation est choisie légèrement inférieure à la fréquence de résonance d'un circuit oscillant incluant le primaire du transformateur élévateur de cet onduleur. En diminuant la fréquence de fonctionnement
par rapport à cette valeur optimale, on arrive bien effectivement à
faire décroître, dans une plage limitée, la tension de sortie délivrée
par l'onduleur (c'est ce que réalise la seconde boucle de régulation et
de réglage précitée) mais au prix d'une augmentation notable de
l'ondulation résiduelle de la tension continue appliquée au générateur de rayons X.

L'invention permet de résoudre tous ces inconvénients.

Dans cet esprit, l'invention concerne essentiellement un système d'alimentation haute tension d'une charge, telle que par
exemple un générateur de rayons X, comportant un pont redresseur,
un onduleur du type à résonance alimenté par ledit pont redresseur
et des moyens de régulation et de réglage pour stabiliser la tension
délivrée à cette charge par ledit onduleur à une valeur prédéterminée réglable, caractérisé en ce que ledit onduleur est piloté à
une fréquence de fonctionnement prédéterminée, que des moyens de
commutation commandés formant hacheur sont insérés entre ledit
redresseur et ledit onduleur et en ce que ces moyens de commutation sont pilotés par lesdits moyens de régulation et de réglage.

Ainsi, la fréquence de fonctionnement de l'onduleur peut être
réglée une fois pour toutes légèrement inférieure à la fréquence de
résonance du circuit oscillant susmentionné, ce qui permet d'obtenir
un taux d'ondulation résiduelle réduit pour toute la plage de variations de tension du système d'alimentation. Par ailleurs, le pont
redresseur est un simple pont de Graetz à diodes, ce qui élimine
l'utilisation de thyristors coûteux à ce niveau. Une seule boucle de
régulation commande le fonctionnement du hacheur. La fréquence
de fonctionnement de ce dernier est élevée, de l'ordre de quelques
kHz. Sa rapidité de réponse est donc bien meilleure que celle d'un
pont de Graetz à thyristors fonctionnant à la fréquence du réseau.
D'autre part, le filtrage est plus facile à cette fréquence et vis-à-vis
du réseau, le système présente un meilleur cos $\varphi$.

L'invention sera mieux comprise et d'autres avantages de celle-ci apparaîtront mieux à la lumière de la description qui va suivre d'un système d'alimentation haute tension conforme au principe de l'invention, donnée uniquement à titre d'exemple et faite en référence aux dessins annexés dans lesquels :

- la figure 1 est un schéma de principe d'un système d'alimentation haute tension selon l'invention ;

- la figure 2 est un graphe illustrant le fonctionnement de l'onduleur ; et

- la figure 3 illustre une variante possible des moyens de commutation formant hacheur.

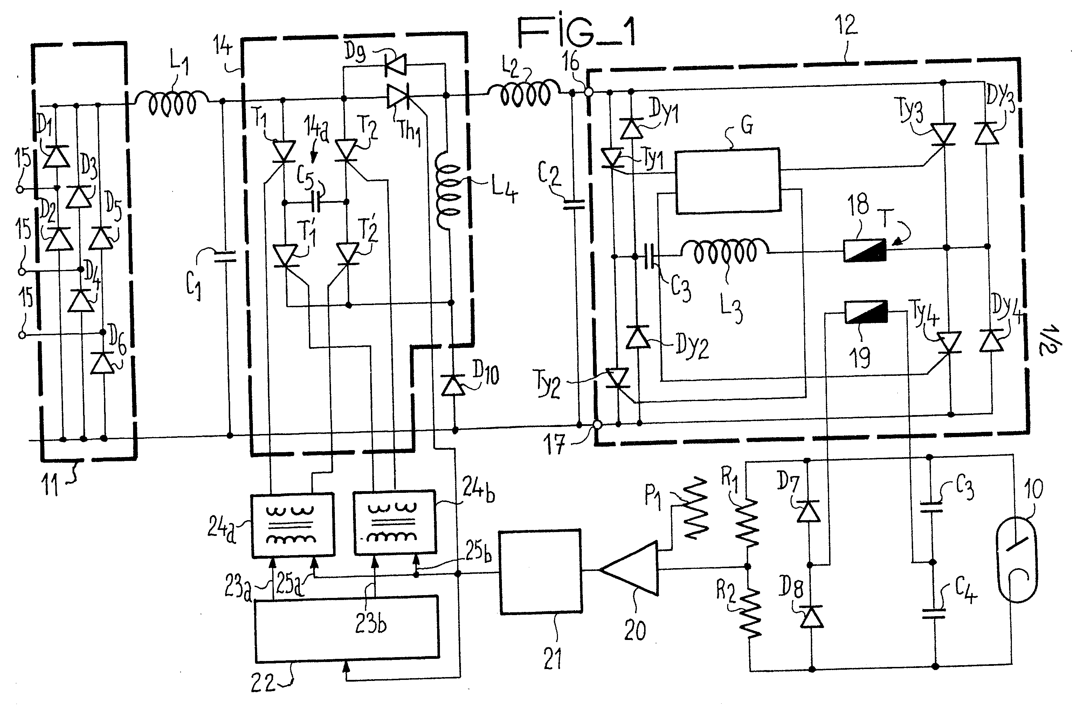

Le schéma de la figure 1 représente un système d'alimentation d'une charge 10 qui est ici un tube générateur de rayons X. Ce système se compose essentiellement d'un pont redresseur 11 à diodes, d'un onduleur 12 du type à résonance, alimenté par le pont redresseur 11, de moyens de régulation et de réglage 13 pour stabiliser la tension délivrée à la charge 10 par l'onduleur à une valeur prédéterminée réglable et de moyens de commutation commandés 14, formant hacheur, interconnectés entre le pont redreseur et l'onduleur. Le pont redresseur 11 est un classique pont de GRAETZ à six diodes $D_1$-$D_6$ reliées à un réseau de distribution de courant alternatif triphasé 15. La sortie du pont redresseur 11 est reliée à l'entrée d'un quadripôle formant une cellule de filtrage comportant une self $L_1$ en tête et un condensateur $C_1$ en dérivation. Ce quadripôle est monté en cascade avec les moyens 14 formant hacheur, le point commun de la self $L_1$ et du condensateur $C_1$ étant relié à l'anode d'un thyristor $Th_1$, constituant l'élément de commutation principal des moyens 14, lesquels seront décrits en détail plus loin. La sortie des moyens de commutation commandés 14 est connectée en cascade à l'entrée d'un autre quadripôle formant cellule de filtrage, comportant une self $L_2$ en tête et un condensateur $C_2$ en dérivation. La sortie de ce quadripôle est connectée aux bornes d'alimentation 16,17 de l'onduleur 12. Celui-ci est d'un type connu dit "à résonance" c'est à dire constitué par un montage

4

en pont de quatre thyristors $Ty_1$, $Ty_2$, $Ty_3$ et $Ty_4$. Une diagonale du pont est constituée par les bornes d'alimentation 16,17 et reçoit donc une tension continue d'alimentation tandis que l'autre diagonale est constituée par un branchement en séries d'un condensateur $C_3$, d'une self $L_3$ et l'enroulement primaire 18 d'un transformateur élévateur T. Des diodes de récupération $Dy_1$-$Dy_4$ sont respectivement connectées en anti-parallèle aux bornes des thyristors $Ty_1$-$Ty_4$. Un circuit générateur d'impulsions de commande de l'onduleur G pilote d'une part les gachettes de deux thyristors $Ty_1$ et $Ty_4$ appartenant à deux branches différentes du pont pour appliquer la tension d'alimentation au circuit oscillant constitué par le condensateur $C_3$ et les selfs $L_3$ et 18 selon une polarité possible et, d'autre part, les gachettes des deux autres thyristors $Ty_2$, $Ty_3$ pour appliquer la tension d'alimentation au même circuit oscillant, selon l'autre polarité possible.

L'enroulement secondaire 19 du transformateur élévateur T est relié à la charge 10 par l'intermédiaire d'un montage en pont connu formant doubleur de tension et constitué de deux diodes $D_7$, $D_8$ en série et de deux condensateurs $C_3$, $C_4$ en série, la charge 10 étant reliée aux points communs des diodes et condensateurs et l'enroulement secondaire étant relié entre le point commun des deux diodes et le point commun des deux condensateurs. Un diviseur de tension formé de deux résistances $R_1$, $R_2$ en série, branché en parallèle sur la charge 10, constitue le premier élément des moyens de régulation et de réglage 13 mentionnés plus haut. Le point commun des résistances $R_1$ et $R_2$ est relié à une entrée d'un amplificateur différentiel 20 qui reçoit sur son autre entrée une tension de référence règlable par un potentiomètre $P_1$. La sortie de l'amplificateur 20 est reliée à un circuit 21 classique formant générateur d'impulsions de pilotage. Ces impulsions de durée variable assurent la commande du thyristor $Th_1$. Le déclenchement du thyristor est piloté en synchronisme avec chaque front montant d'impulsion tandis que le blocage de ce même thyristor est commandé à partir de chaque front descendant. Pour cela, la sortie du circuit 21 est connectée à l'entrée d'un circuit d'aiguillage 22 (du genre bistable) qui est relié par deux sorties aux entrées de validation 23a, 23b respectives de deux circuits de pilotage 24a, 24b commandant chacun deux thyristors ($T_1$, $T'_1$-$T_2$, $T'_2$ respectivement) du circuit d'extinction 14a du thyristor $Th_1$. Ces circuits de pilotage peuvent comporter notamment des transformateurs d'impulsion à double enroulement secondaire permettant le déclenchement simultané des deux thyristors correspondants, tout en les isolants galvaniquement l'un de l'autre. Chaque circuit de pilotage 24a, 24b comporte une entrée de commande 25a, 25b sensible à un front descendant d'impulsion et reliée à la sortie du circuit 21. Un tel circuit de pilotage élabore donc des impulsions de commande pour les thyristors auxquels il est relié, en synchronisme avec un front descendant d'une impulsion de sortie du circuit 21 et pour autant que son entrée 23 ait reçu un signal de validation du circuit d'aiguillage 22. Ainsi, le thyristor $Th_1$ sera directement déclenché à chaque front montant d'une impulsion délivrée par le générateur 21 et s'éteindra avec le front descendant de cette même impulsion, le circuit d'extinction 14a étant déclenché alternativement par les thyristors $T_1$, $T'_1$ et $T_2$, $T'_2$. Ce circuit d'extinction comporte principalement un condensateur $C_5$ (dont la charge est commandée par les quatres thyristors $T_1$-$T'_1$, $T_2$-$T'_2$), une self $L_4$ et une diode $D_9$ connectée en anti-parallèle entre l'anode et la cathode du thyristor $Th_1$. La self $L_4$ est en série avec une diode $D_{10}$ dite "de roue libre" de la cellule de filtrage $L_2$-$C_2$ et l'ensemble est branché en parallèle à l'entrée de ce quadripôle, la self $L_4$ étant reliée à la cathode du thyristor $Th_1$. Les thyristors $T_1$ et $T'_2$ sont connectés en série ainsi que les thyristors $T_2$ et $T'_1$, ces deux branches étant connectées en parallèle entre l'anode du thyristor $Th_1$ et le point commun de la self $L_4$ et de la diode $D_{10}$. Le condensateur $C_5$ est branché entre le point commun des thyristors $T_1$, $T'_2$ et le point commun des thyristors $T_2$, $T'_1$. Le condensateur $C_5$ et la diode $L_4$ forment un circuit oscillant calculé pour contrôler la décharge du condensateur $C_5$ pendant un temps suffisant pour annuler le courant

du thyristor $Th_1$ et le maintenir dans cet état pendant un intervalle de temps supérieur à son temps de désarmorçage.

Le fonctionnement général du système qui vient d'être décrit est le suivant.

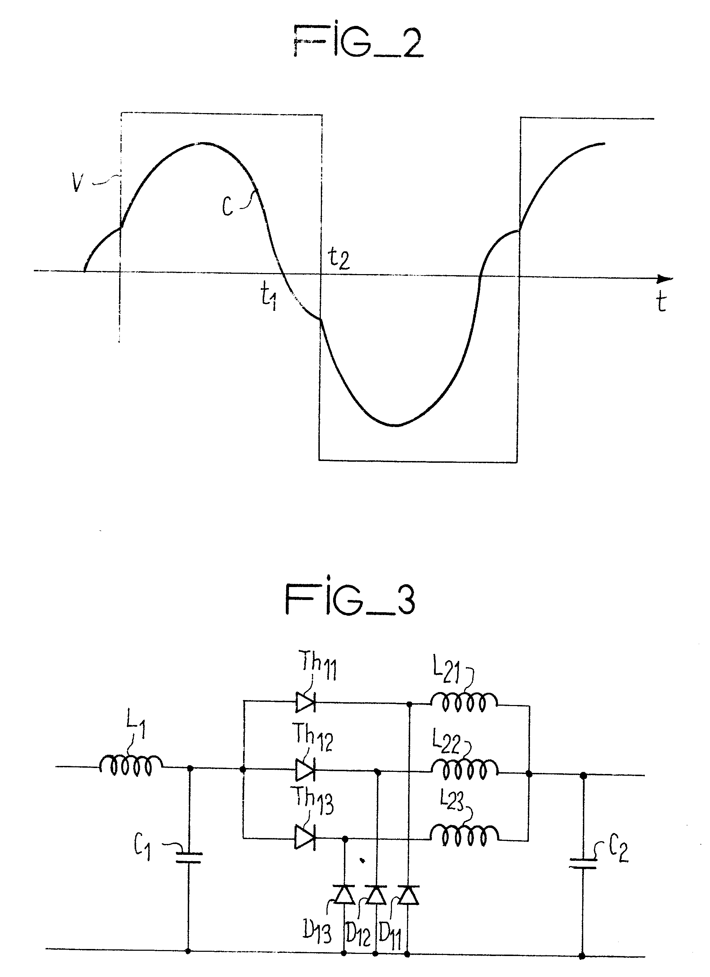

Le circuit oscillant de l'onduleur, formé par le condensateur $C_3$, la self $L_3$ et l'enroulement primaire 18, à une fréquence de résonance donnée et la fréquence de fonctionnement de l'onduleur, imposée par le générateur G est fixe et choisie légèrement inférieure à cette fréquence de résonance. La figure 2 représente la relation tension-courant dans le circuit oscillant. La tension V a la forme d'une onde rectangulaire puisqu'elle est imposée par les commutations des thyristors. Le courant C est presque sinusoïdal, il s'annule à l'instant $t_1$ et change de signe. Comme les deux thyristors correspondants ne peuvent conduire en inverse, le courant s'écoule par les diodes de récupération associées. A l'instant $t_2$, les deux autres thyristors du pont sont amorcés. L'intervalle $T_1$-$T_2$ correspondant à l'avance du courant par rapport à la tension est choisi supérieur au temps de désamorçage des thyristors. La tension prélévée à l'enroulement secondaire 19 du transformateur est redressée et doublée par le circuit de diodes $D_7$, $D_8$ et condensateurs $C_3$, $C_4$ pour être appliquée au tube générateur de rayons X 10. Les moyens de régulation et de règlage 13 pilotés par la tension aux bornes de la charge permettent de faire varier le rapport cyclique de conduction du thyristor $Th_1$, c'est à dire de faire varier en conséquence la tension d'alimentation de l'onduleur 12, appliquée entre les bornes 16, 17. Selon l'invention, un seul interrupteur statique, le thyristor $Th_1$, permet de compenser les variations du réseau d'alimentation et de maintenir la valeur de la haute tension à la valeur désirée. La fréquence de fonctionnement est élevée, au minimum plusieurs khZ, et la rapidité de réponse du système est grande, très supérieure à celle des systèmes fonctionnant à la fréquence du réseau. Par rapport à un pont de Graetz à thyristors commandés par la phase, le système hacheur présente un meilleur Cos $\varphi$ et le filtrage de la tension de sortie est beaucoup plus facile.

7

Le fonctionnement particulier des moyens de commutation commandés 14 est le suivant. A chaque front montant d'une impulsion délivrée par le circuit 21, le thyristor $Th_1$ est amorcé. Si l'on suppose que le condensateur $C_5$ a été préalablement chargé par la mise en conduction des deux thyristors $T_1$ et $T'_1$, on pourra provoquer l'extinction du thyristor $Th_1$ par la mise en conduction des thyristors $T_2$, $T'_2$, à la fin de l'impulsion délivrée par le circuit 21. Cette mise en conduction des thyristors $T_2$, $T'_2$ sera commandée par le circuit 24b préalablement validé par le circuit d'aiguillage 22. Le condensateur $C_5$ se déchargera donc en commençant par annuler le courant traversant le thyristor $Th_1$, condition de son extinction, puis en s'écoulant par la diode $D_9$, ceci pendant un temps supérieur au temps de désamorçage du thyristor. D'autre part, comme le condensateur $C_5$ et la self $L_4$ définissent un circuit oscillant (calculé pour garantir un temps de décharge du condensateur supérieur au temps de désamorçage du thyristor) la tension va s'inverser aux bornes du condensateur $C_5$ de sorte que celui-ci se trouvera rechargé avec une polarité inverse en vue de la prochaine extinction du thyristor $Th_1$, qui aura lieu cette fois par mise en conduction des thyristors $T_1$, $T'_1$.

Bien entendu, la structure des moyens de commutation commandés 14 n'est pas limitée aux modes de réalisation de la figure 1. En particulier, lorsque la puissance électrique demandée au système n'est pas trop importante, il devient avantageux d'utiliser un ou plusieurs transistors à la place du thyristor $Th_1$, ce qui simplifie grandement l'agencement de commande du hacheur et permet de fonctionner à une fréquence plus élevée, facilitant encore le filtrage de la tension de sortie. Par ailleurs, on peut à la fois augmenter la puissance disponible et améliorer le filtrage en utilisant un hacheur polyphasé comme illustré à la figure 3 où les circuits de déclenchement et d'extinction n'ont pas été représentés mais découlent avec évidence de ceux de la figure 1. Selon cette variante, le thyristor $Th_1$ est remplacé par trois thyristors $Th_{11}$, $Th_{12}$, $Th_{13}$. Les anodes de ces thyristors sont communes et reliées comme

8

précédemment à la self $L_1$. Leurs cathodes sont respectivement reliées à des selfs $L_{21}$, $L_{22}$ et $L_{23}$ formant avec le condensateur $C_2$ une cellule de filtrage. Chaque self est également associée à sa propre diode dite "de roue libre" $D_{11}$, $D_{12}$ et $D_{13}$. Les trois thyristors sont commandés pour fonctionner à la même fréquence mais déphasés de $2\pi/3$ les uns par rapport aux autres. Tout se passe comme si l'on avait un seul hacheur trois fois plus puissant et fonctionnant à une fréquence triple.

Dans tous les cas, lorsque le système est utilisé en radiologie, il est avantageux de régler le temps de pose par l'intermédiaire de la commande du hacheur ; c'est le mode de commande qui permet de déterminer le début et la fin de l'exposition avec le plus de précision.

9

REVENDICATIONS

1. Système d'alimentation haute tension d'une charge telle que par exemple un générateur de rayons X, comportant un redresseur (11), un onduleur du type à résonance (12) alimenté par ledit pont redresseur et des moyens de régulation et de règlage (13), pour stabiliser la tension délivrée à cette charge par ledit onduleur à une valeur prédéterminée règlable, caractérisé en ce que ledit onduleur (12) est piloté à une fréquence de fonctionnement prédéterminée, que des moyens de commutation commandés (14), formant hacheur, sont interconnectés entre ledit redresseur et ledit onduleur et que ces moyens de commutation sont pilotés par lesdits moyens de régulation et de réglage.

2. Système d'alimentation selon la revendication 1, caractérisé en ce que ledit pont redresseur (11) est un pont à diodes.

3. Système d'alimentation selon la revendication 1 ou 2, caractérisé en ce que ladite fréquence de fonctionnement prédéterminée dudit onduleur est choisie légèrement inférieure à sa propre fréquence de résonance.

4. Système d'alimentation selon l'une des revendications précédentes, caractérisé en ce que lesdits moyens de régulation et de règlage comprennent un diviseur de tension ($R_1$, $R_2$) connecté aux bornes de ladite charge (10) pour élaborer une tension d'erreur, un moyen générateur de tension de référence ($P_1$) règlable, un amplificateur différentiel (20) dont les entrées sont reliées respectivement audit diviseur de tension et audit générateur de tension de référence et un générateur d'impulsions de pilotage (21, 22, $14_a$) recevant le signal de sortie dudit amplificateur et dont une sortie est reliée à une entrée de commande dudit moyen de commutation commandé ($Th_1$) formant hacheur.

5. Système d'alimentation selon la revendication 1, caractérisé en ce que ledit moyen de commutation commandé, formant hacheur,

10

est associé à une cellule de filtrage ($L_2$, $C_2$) connectée entre celui-ci et ledit onduleur (12).

6. Système de commutation selon l'une des revendications précédentes, caractérisé en ce que ledit moyen de commutation commandé comporte un unique interrupteur statique ($Tn_1$) tei que par exemple un thyristor.

7. Système d'alimentation selon l'une des revendication 1 à 6, caractérisé en ce que ledit moyen de commutation commandé comporte plusieurs interrupteurs statiques ($Th_{11}$, $Th_{12}$, $Th_{13}$) dont les entrées de commande sont respectivement pilotées par des signaux déphasés élaborés par lesdits moyens de régulation et de réglage.

0112763

FIG_1

# FIG_2

# FIG_3

# 0112763

Numéro de la demande

**Office européen des brevets**

## RAPPORT DE RECHERCHE EUROPEENNE

EP 83 40 2407

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-2 293 825 (SIEMENS)<br><br>* Page 5, ligne 34 - page 9, ligne 4 * | 1,2,4-6 | H 02 M 3/315<br>H 02 M 7/515 |
| Y | US-A-4 024 453 (CORRY)<br>* Colonne 4, lignes 57-61 * | 3 | |
| Y | FR-A-2 427 728 (TOCCO-STELL)<br>* Revendication 1; lignes 9-10 * | 3 | |
| Y | GB-A-2 085 677 (GENERAL MOTORS)<br>* Figure 6 * | 7 | |

**DOMAINES TECHNIQUES RECHERCHES (Int. Cl. 3)**

H 02 M 3/00
H 02 M 7/00

Le présent rapport de recherche a été établi pour toutes les revendications

| Lieu de la recherche<br>LA HAYE | Date d'achèvement de la recherche<br>08-03-1984 | Examinateur<br>BERTIN M.H.J. |
|---|---|---|